# EUROPÄISCHE PATENTSCHRIFT

(11) **EP 2 883 284 B1**
(45) Veröffentlichungstag und Bekanntmachung des Hinweises auf die Patenterteilung: **07.09.2016**
(21) Anmeldenummer: 13739407.8
(22) Anmeldetag: 16.07.2013
(51) Int. Cl.: H01R 9/26, H02B 1/052, H02B 1/20

(54) **ANSCHLUSSMODUL**
CONNECTION MODULE
MODULE DE CONNEXION

(30) Priorität: 08.08.2012 DE 102012107264
(43) Veröffentlichungstag der Anmeldung: 17.06.2015
(73) Patentinhaber: Phoenix Contact GmbH & Co. KG, 32825 Blomberg (DE)
(72) Erfinder: FALK, Detlev, 32825 Blomberg (DE)
(74) Vertreter: Janke, Christiane
(86) Internationale Anmeldenummer: PCT/EP2013/064998
(87) Internationale Veröffentlichungsnummer: WO 2014/023532

(56) Entgegenhaltungen:
- EP-A1- 0 327 385
- EP-A1- 1 258 957
- EP-A2- 0 155 905
- DE-A1- 19 531 115
- FR-A1- 2 859 317

## Beschreibung

Die Erfindung betrifft ein Anschlussmodul, welches ein einen Gehäusefuss und eine Gehäuseoberseite aufweisendes Gehäuse, wobei das Gehäuse über den Gehäusefuss mittels einer Verschwenkbewegung des Gehäuses auf einer Tragschiene befestigbar ist, mehrere in dem Gehäuse angeordnete Anschlusselemente und mindestens eine an einer Querseite des Gehäuses angeordnete Steckbrückeneinführungsöffnung zur Aufnahme einer Steckbrücke, wobei in der Steckbrückeneinführungsöffnung ein Kontaktelement zur Ausbildung einer elektrischen Kontaktierung mit der Steckbrücke angeordnet ist, aufweist.

Ein derartiges Anschlussmodul ist meist scheibenförmig ausgebildet, wobei zur Ausbildung einer Anschlussmodulbaueinheit mehrere Anschlussmodule hintereinander auf einer Tragschiene angeordnet werden können. Steckbrücken bzw. Bussysteme dienen dazu, die einzelnen Anschlussmodule miteinander zu verbinden.

Ein Bussystem wird üblicherweise an der Tragschiene befestigt, so dass das Gehäuse des Anschlussmoduls mit der Tragschiene und dem Bussystem über den Gehäusefuss verbunden wird. Nachteilig bei derartigen Tragschienen-Bussystemen ist die geringe Stromtragfähigkeit, welche maximal 8 A beträgt, was für einige Anwendungen nicht ausreichend ist.

Werden Bussysteme in Form von Steckbrücke, die sich jeweils über mehrere hintereinander angeordnete Anschlussmodule erstrecken, eingesetzt, so ist es bekannt, diese nicht an dem Gehäusefuss, sondern an einer Querseite des Gehäuses zu befestigen, wie dies beispielsweise aus der WO 2011/107457 A1 bekannt ist. Bei einer derartigen Anschlussmodulbaueinheit werden bei einer Montage zunächst die einzelnen Anschlussmodüle auf die Tragschiene aufgerastet und anschließend werden eine oder mehrere Steckbrücken in die Anschlussmodule auf der Tragschiene aufgerastet. Zur Demontage der Anschlussmodulbaueinheit müssen zunächst die Steckbrücken entfernt werden, bevor einzelne Anschlussmodule von der Tragschiene gelöst werden können, was zu einer umständlichen und zeitverzögernden Handhabung führt.

EP 0 327 385 A1 offenbart ein Anschlußmodul nach dem Oberbegriff des Anspruchs 1.

Der Erfindung liegt daher die Aufgabe zu Grunde, ein Anschlussmodul zur Verfügung zu stellen, bei welchem die Handhabung beim Befestigen des Anschlussmoduls an einer Tragschiene und an einer Steckbrücke sowie bei einem Lösen des Anschlussmoduls von einer Tragschiene und von einer Steckbrücke verbessert werden kann.

Bei einem Anschlussmodul der eingangs näher. bezeichneten Art wird diese Aufgabe erfindungsgemäß dadurch gelöst, dass sich die Steckbrückeneinführungsöffnung in Einführungsrichtung der Steckbrücke in die Steckbrückeneinführungsöffnung von dem Gehäusefuss in Richtung der Gehäuseoberseite in einem Winkel α zwischen 20 und 70° zu der Querachse des Gehäuses erstreckt.

Zweckmäßige Ausgestaltungen und vorteilhafte Weiterbildungen der Erfindung sind in den Unteransprüchen angegeben.

Die Steckbrückeneinführungsöffnung erstreckt sich erfindungsgemäß ausgehend von ihrem Anfang bis zu ihrem Ende, an welchem die Steckbrücke im eingeführten Zustand anliegt, von unten nach oben, d. h. von dem Gehäusefuss in Richtung der Gehäuseoberseite, so dass die Steckbrückeneinführungsöffnung winklig zu der Querachse des Gehäuses ausgerichtet ist. Der Winkel α der Steckbrückeneinführungsöffnung zu der Querachse des Gehäuses beträgt dabei zwischen 20 und 70°, bevorzugt zwischen 30 und 60°, besonders bevorzugt beträgt er 45°. Der Winkel α ist dabei abhängig von der Verschwenkbewegung des Gehäuses des Anschlussmoduls auf der Tragschiene und der Position der Steckbrücke in Bezug auf das Gehäuse. Durch diesen Winkel α wird ermöglicht, dass bei einer seitlichen Verschwenkbewegung des Anschlussmoduls auf der Tragschiene das Anschlussmodul mit der Steckbrückeneinführungsöffnung mit der seitlich zu der Tragschiene angeordneten Steckbrücke durch Einführen der Steckbrücke in die Steckbrückeneinführungsöffnung verbunden und auch wieder gelöst werden kann. Ein mittig zwischen zwei Anschlussmodulen angeordnetes Anschlussmodul kann somit von der Tragschiene und auch von der Steckbrücke gelöst werden, ohne dass die benachbart dazu angeordneten Anschlussmodule ebenfalls von der Tragschiene gelöst werden müssten. Auch eine Befestigung eines Anschlussmoduls zwischen zwei bereits an der Tragschiene angeordneten Anschlussmodulen kann somit ohne ein Lösen der benachbarten Anschlussmodule durch eine Verschwenkbewegung des zu befestigenden Anschlussmoduls auf der Tragschiene und einem Einhaken oder Verrasten des Anschlussmoduls sowohl an der Tragschiene als auch an der Steckbrücke erfolgen. Die Steckbrücke ist vorzugsweise in Form einer länglichen Schiene ausgebildet, welche in ihrer Länge an die Anzahl der hintereinander angeordneten, zu einer Baueinheit zusammengefassten Anschlussmodule angepasst werden kann. Eine Anschlussmodulbaueinheit umfasst dabei mehrere Anschlussmodule, mindestens eine Steckbrücke und eine Tragschiene. Mittels des erfindungsgemäßen Anschlussmoduls kann aufgrund der vereinfachten Befestigung und des vereinfachten Austausches eines Anschlussmoduls aus einer Anschlussmodulbaueinheit ein für den Benutzer wesentlich vereinfachtes und damit schnelleres Handling eines Anschlussmoduls und damit auch einer Anschlussmodulbaueinheit erreicht werden.

Nach einer bevorzugten Ausgestaltung der Erfindung ist die Steckbrückeneinführungsöffnung an einem angrenzend zu der Gehäuseoberseite ausgebildeten oberen Bereich der Querseite des Gehäuses angeordnet. Hierdurch ist eine besonders günstige Positionierung der Steckbrückeneinführungsöffnung in Bezug auf den Drehpunkt des Anschlussmoduls auf der Tragschiene möglich, um ein Lösen und Befestigen des Anschlussmoduls über die Steckbrückeneinführungsöffnung an einer fest positionierten Steckbrücke möglichst einfach ausbilden zu können.

Die Steckbrückeneinführungsöffnung ist bevorzugt an einem Moduleinsatz ausgebildet, wobei der Moduleinsatz in einer an der Querseite des Gehäuses ausgebildeten Öffnung eingesetzt ist. Der Moduleinsatz ist als ein gesondertes Bauteil zu dem Gehäuse des Anschlussmoduls bzw. den beiden Gehäusehälften, welche das Gehäuse des Anschlussmoduls durch Zusammenfügen ausbilden, ausgebildet und kann daher von dem Gehäuse bzw. den beiden Gehäusehälften getrennt werden. Bei einer Montage des Anschlussmoduls wird der Moduleinsatz vor dem Zusammenfügen der beiden Gehäusehälften zu einem Gehäuse in eine an einer ersten Gehäusehälfte ausgebildete erste Aussparung, die zusammen mit einer zweiten an einer zweiten Gehäusehälfte ausgebildeten Aussparung in dem zusammengefügten Zustand der beiden Gehäusehälften die Öffnung an der Querseite des Gehäuses ausbildet, eingesetzt. Der Moduleinsatz umfasst ein oder mehrere Steckbrückeneinführungsöffnungen sowie die in den Steckbrückeneinführungsöffnungen angeordneten Kontaktelemente. Im eingesetzten Zustand schließt der Moduleinsatz vorzugsweise bündig mit der Querseite des Gehäuses ab. Der Moduleinsatz ist leicht austauschbar, so dass in Abhängigkeit der Anzahl der Steckbrücken ein passender Moduleinsatz, welcher eine an die Anzahl der Steckbrücken angepasste Anzahl an Steckbrückeneinführungsöffnungen aufweist, ausgewählt werden kann. Ist zudem das in der Steckbrückeneinführungsöffnung angeordnete Kontaktelement nicht mehr funktionsfähig, kann der Moduleinsatz schnell, einfach und kostengünstig ausgetauscht werden, ohne dass das gesamte Anschlussmodul ausgetauscht werden müsste. Der Moduleinsatz kann beispielsweise mittels einer Rastverbindung lösbar in der Öffnung an der Querseite des Gehäuses bzw. in den die Öffnung ausbildenden Aussparungen der beiden Gehäusehälften des Gehäuses befestigt werden. Alternativ zu dem Moduleinsatz ist es aber auch möglich, dass die Steckbrückeneinführungsöffnung unmittelbar an der Querseite des Gehäuses ausgebildet ist und damit Teil des Gehäuses bzw. der Gehäusehälften ist.

Weiter ist es vorzugsweise vorgesehen, dass die Steckbrückeneinführungsöffnung an einem von der Querseite des Gehäuses abstehenden Halteelement, welches vorzugsweise u-förmig ausgebildet ist, angeordnet ist. Durch das Abstehen des Halteelementes von der Querseite des Gehäuses wird erreicht, dass die Steckbrückeneinführungsöffnung keinen Bauraum innerhalb des Gehäuses beansprucht. Das vorzugsweise u-förmig ausgebildete Halteelement weist zwei parallel zueinander angeordnete Haltearme auf, zwischen denen die Steckbrückeneinführungsöffnung ausgebildet ist, so dass eine in die Steckbrückeneinführungsöffnung eingeführte Steckbrücke zwischen den beiden Haltearmen gehalten ist. Zwischen diesen beiden Haltearmen ist auch das Kontaktelement angeordnet, welches vorzugsweise ebenfalls u-förmig ausgebildet ist, so dass es unmittelbar an den Haltearmen anliegen und damit durch die Haltearme gehalten werden kann. Das Halteelement kann an einem Moduleinsatz ausgebildet sein oder unmittelbar an der Querseite des Gehäuses und damit einstückig mit dem Gehäuse ausgebildet sein.

Nachfolgend wird die Erfindung unter Bezugnahme auf die anliegende Zeichnung anhand einer bevorzugten Ausführungsform näher erläutert.

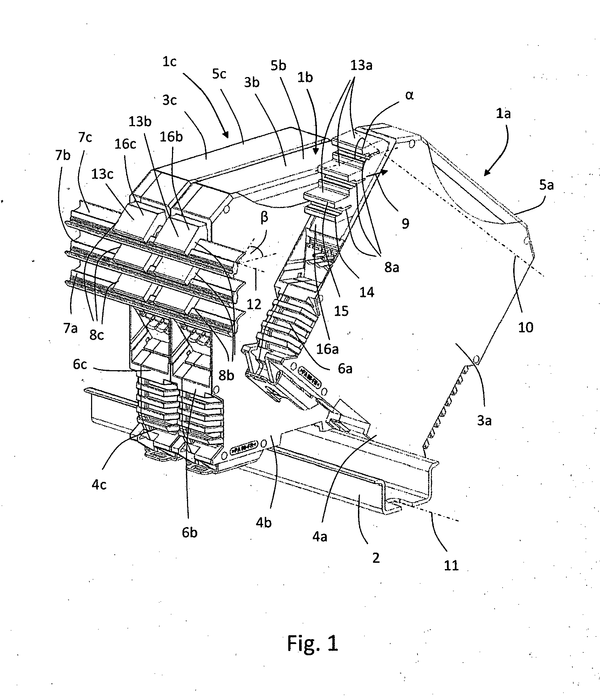

Die einzige Figur zeigt drei nebeneinander angeordnete Anschlussmodule 1a, 1b, 1c, wobei zwei der Anschlussmodule 1b, 1c auf einer Tragschiene 2 befestigt sind und das dritte Anschlussmodul 1a in einer Position gezeigt ist, bei welcher es auf der Tragschiene 2 zum Lösen oder Befestigen verschwenkt wird. Die Anschlussmodule 1a, 1b, 1c sind scheibenförmig ausgebildet und weisen ein im Wesentlichen rechteckförmig ausgebildetes Gehäuse 3a, 3b, 3c auf. Die Gehäuse 3a, 3b, 3c sind jeweils aus zwei Gehäusehälften ausgebildet. Innerhalb des Gehäuses 3a, 3b, 3c sind mehrere, hier nicht gezeigte, Anschlusselemente angeordnet. Die Gehäuse 3a, 3b, 3c weisen jeweils einen Gehäusefuss 4a, 4b, 4c und eine gegenüberliegend zu dem Gehäusefuss 4a, 4b, 4c ausgebildete Gehäuseoberseite 5a, 5b, 5c auf, wobei mittels des Gehäusefusses 4a, 4b, 4c das Gehäuse 3a, 3b, 3c auf der Tragschiene 2 befestigt werden kann.

An einer sich zwischen dem Gehäusefuss 4a, 4b, 4c und der Gehäuseoberseite 5a, 5b, 5c erstreckenden. Querseite 6a, 6b, 6c des Gehäuses 3a, 3b, 3c sind die Anschlussmodule 1a, 1b, 1c jeweils mit drei relativ zu der Tragschiene 2 ortsfest positionierten Steckbrücken 7a, 7b, 7c verbunden. Die Verbindung erfolgt über an der Querseite 6a, 6b, 6c des Gehäuses 3a, 3b, 3c ausgebildete Steckbrückeneinführungsöffnungen 8a, 8b, 8c, wobei hier die Anschlussmodule 1a, 1b, 1c jeweils drei Steckbrückeneinführungsöffnungen 8a, 8b, 8c aufweisen, welche übereinander angeordnet sind. Innerhalb jeder Steckbrückeneinführungsöffnung 8a, 8b, 8c ist ein Kontaktelement zur Ausbildung einer elektrischen Kontaktierung mit der Steckbrücke 7a, 7b, 7c angeordnet. Die Kontaktelemente sind mit den in dem Gehäuse 3a, 3b, 3c angeordneten Anschlusselementen, insbesondere mit in den Anschlusselementen angeordneten Stromschienen, verbunden. Die Kontaktelemente sind vorzugsweise als u-förmig ausgebildete Kontaktklemmen ausgebildet, welche die Steckbrücke 7a, 7b, 7c an einem ihrer Kantenbereiche zur Ausbildung einer elektrischen Kontaktierung umgreifen können.

Die Steckbrücken 7a, 7b, 7c sind jeweils in Form einer Schiene, insbesondere einer Kupferschiene, ausgebildet und dienen zur Stromeinspeisung in die Anschlussmodule, insbesondere an die Stromschienen innerhalb der Anschlussmodule, wobei hierbei eine Stromübertragung von bis zu 40 A möglich ist. Die Länge der Steckbrücken 7a, 7b, 7c kann durch Kürzen an die Anzahl der zu überbrückenden Anschlussmodule 1a, 1b, 1c angepasst werden. In ihrer Ausrichtung verlaufen die Steckbrücken 7a, 7b, 7c mit ihrer Längsachse parallel zu der Längsachse der Tragschiene 2 und sind seitlich versetzt zu der Tragschiene 2, oberhalb der Tragschiene 2 angeordnet.

Die Steckbrücken 7a, 7b, 7c, welche nicht gerade zu der Längsachse 11 der Tragschiene 2, sondern mit einem Neigungswinkel β > 0° um ihre eigene Längsachse 12 verkippt zu der Längsachse 11 der Tragschiene 2 angeordnet sind, werden zur Ausbildung einer Kontaktierung mit den Anschlussmodulen 1a, 1b, 1c in die entsprechenden Steckbrückeneinführungsöffnungen 8a, 8b, 8c der Anschlussmodule 1a, 1b, 1c durch einer Verschwenkbewegung der Anschlussmodule 1a, 1b, 1c auf der Tragschiene 2 in Richtung der Steckbrücken 7a, 7b, 7c eingeführt. Die Steckbrückeneinführungsöffnungen 8a, 8b, 8c erstrecken sich dabei in Einführungsrichtung, mit dem Pfeil 9 angedeutet, der Steckbrücken 7a, 7b, 7c in die Steckbrückeneinführungsöffnungen 8a, 8b, 8c von dem Gehäusefuss 4a, 4b, 4c in Richtung der Gehäuseoberseite 5a, 5b, 5c in einem Winkel α zwischen 20 und 70°, vorzugsweise von 45°, zu der Querachse 10 des Gehäuses 3a, 3b, 3c, hier anhand des ersten Anschlussmoduls 1a gezeigt. Der Winkel α der Steckbrückeneinführungsöffnung 8a, 8b, 8c ist dabei an den Neigungswinkel β der Steckbrücke 7a, 7b, 7c angepasst, vorzugsweise entspricht der Winkel α dem Neigungswinkel β, um ein einfaches, gleichmäßiges Einführen der Steckbrücken 7a, 7b, 7c in die jeweiligen Steckbrückeneinführungsöffnungen 8a, 8b, 8c bei einer Verschwenkbewegung des Gehäuses 3a, 3b, 3c des Anschlussmoduls 1a, 1b, 1c auf der Tragschiene 2 zu ermöglichen.

Die Steckbrückeneinführungsöffnungen 8a, 8b, 8c sind hier an einem angrenzend zu der Gehäuseoberseite 5a, 5c, 5d ausgebildeten oberen Bereich der Querseite 6a, 6b, 6c des Gehäuses 3a, 3b, 3c angeordnet.

Ausgebildet sind die Steckbrückeneinführungsöffnungen 8a, 8b, 8c bei der hier gezeigten Ausführungsform an u-förmig ausgebildeten Halteelementen 13a, 13b, 13c, die an der Querseite 6a, 6b, 6c des Gehäuses 3a, 3b, 3c ausgebildet sind und von dieser abstehen, indem diese von dem Gehäuse 3a, 3b, 3c weggerichtet sind. Die Steckbrückeneinführungsöffnungen 8a, 8b, 8c erstrecken sich somit nicht bis in die Gehäusehälften des Gehäuses 3a, 3b, 3c hinein.

Die u-förmig ausgebildeten Halteelemente 13a, 13b, 13c weisen jeweils zwei parallel zueinander angeordnete Haltearme 14, 15 auf, zwischen denen jeweils eine Steckbrückeneinführungsöffnung 8a, 8b, 8c ausgebildet ist, so dass eine in die Steckbrückeneinführungsöffnung 8a, 8b, 8c eingeführte Steckbrücke 7a, 7b, 7c zwischen den beiden Haltearmen 14, 15 gehalten ist. Zwischen diesen beiden Haltearmen 14, 15 ist auch das Kontaktelement angeordnet, welches vorzugsweise ebenfalls u-förmig ausgebildet ist, so dass es unmittelbar an den Haltearmen 14, 15 anliegen kann und damit durch die Haltearme 14, 15 gehalten werden kann.

Jedes Anschlussmodul 1a, 1b, 1c weist bei der hier gezeigten Ausführungsform drei Halteelemente 13a, 13b, 13c auf, wobei die Halteelemente 13a, 13b, 13c und damit auch die Steckbrückeneinführungsöffnungen 8a, 8b, 8c an einem im Wesentlichen plattenförmigen Moduleinsatz 16a, 16b, 16c ausgebildet sind. Die Moduleinsätze 16a, 16b, 16c sind jeweils in einer an der Querseite 6a, 6b, 6c des Gehäuses 3a, 3b, 3c ausgebildeten Öffnung eingesetzt, wobei das Einsetzen der Moduleinsätze 16a, 16b, 16c vor dem Zusammenfügen der beiden Gehäusehälften des Gehäuses 3a, 3b, 3c erfolgt.

Sowohl das Gehäuse 3a, 3b, 3c als auch die Halteelemente 13a, 13b, 13b und der Moduleinsatz 16a, 16b, 16c sind vorzugsweise aus einem Isoliermaterial, beispielsweise einem Kunststoffmaterial, ausgebildet.

### Bezugszeichenliste

- Anschlussmodul: 1a, 1b, 1c
- Tragschiene: 2
- Gehäuse: 3a, 3b, 3c
- Gehäusefuss: 4a, 4b, 4c
- Gehäuseoberseite: 5a, 5b, 5c
- Querseite: 6a, 6b, 6c
- Steckbrücke: 7a, 7b, 7c
- Steckbrückeneinführungsöffnung: 8a, 8b, 8c
- Einführungsrichtung: 9
- Querachse: 10
- Längsachse: 11
- Längsachse: 12
- Halteelement: 13a, 13b, 13c
- Haltearm: 14
- Haltearm: 15
- Moduleinsatz: 16a, 16b, 16c

## Patentansprüche

1. Anschlussmodul, mit
einem einen Gehäusefuss (4a, 4b, 4c) und eine Gehäuseoberseite (5a, 5b, 5c) aufweisenden Gehäuse (3a, 3b, 3c), wobei das Gehäuse (3a, 3b, 3c) über den Gehäusefuss (4a, 4b, 4c) mittels einer Verschwenkbewegung des Gehäuses (3a, 3b, 3c) auf einer Tragschiene (2) befestigbar ist,
mehreren in dem Gehäuse (3a, 3b, 3c) angeordneten Anschlusselementen und
mindestens einer an einer Querseite (6a, 6b, 6c) des Gehäuses (3a, 3b, 3c) angeordneten Steckbrückeneinführungsöffnung (8a, 8b, 8c) zur Aufnahme einer Steckbrücke (7a, 7b, 7c), wobei in der Steckbrückeneinführungsöffnung (8a, 8b, 8c) ein Kontaktelement zur Ausbildung einer elektrischen Kontaktierung mit der Steckbrücke (7a, 7b, 7c) angeordnet ist,
**dadurch gekennzeichnet, dass**
sich die Steckbrückeneinführungsöffnung (8a, 8b, 8c) in Einführungsrichtung (9) der Steckbrücke (7a, 7b, 7c) in die Steckbrückeneinführungsöffnung (8a, 8b, 8c) von dem Gehäusefuss (4a, 4b, 4c) in Richtung der Gehäuseoberseite (5a, 5b, 5c) in einem Winkel α zwischen 20 und 70° zu der Querachse (10) des Gehäuses (3a, 3b, 3c) erstreckt.

2. Anschlussmodul nach Anspruch 1, **dadurch gekennzeichnet, dass** die Steckbrückeneinführungsöffnung (8a, 8b, 8c) an einem angrenzend zu der Gehäuseoberseite (5a, 5b, 5c) ausgebildeten oberen Bereich der Querseite (6a, 6b, 6c) des Gehäuses (3a, 3b, 3c) angeordnet ist.

3. Anschlussmodul nach Anspruch 1 oder 2, **dadurch gekennzeichnet, dass** die Steckbrückeneinführungsöffnung (8a, 8b, 8c) an einem Moduleinsatz (16, 16b, 16c) ausgebildet ist, wobei der Moduleinsatz (16a, 16b, 16c) in einer an der Querseite (6a, 6b, 6c) des Gehäuses (3a, 3b, 3c) ausgebildeten Öffnung eingesetzt ist.

4. Anschlussmodul nach einem der Ansprüche 1 bis 3,
**dadurch gekennzeichnet, dass** die Steckbrückeneinführungsöffnung (8a, 8b, 8c) an einem von der Querseite (6a, 6b, 6c) des Gehäuses (3a, 3b, 3c) abstehenden Halteelement (13a, 13b, 13c) ausgebildet ist.

## Claims

1. Connection module, having a housing (3a, 3b, 3c) comprising a housing base (4a, 4b, 4c) and a housing upper face (5a, 5b, 5c), wherein the housing (3a, 3b, 3c) can be fixed on a supporting rail (2) via the housing base (4a, 4b, 4c) by means of a pivoting movement of the housing (3a, 3b, 3c),
a plurality of connection elements arranged in the housing (3a, 3b, 3c) and
at least one jumper bridge insertion opening (8a, 8b, 8c) arranged on a transverse face (6a, 6b, 6c) of the housing (3a, 3b, 3c) for receiving a jumper bridge (7a, 7b, 7c), wherein a contact element for forming an electrical contact with the jumper bridge (7a, 7b, 7c) is arranged in the jumper bridge insertion opening (8a, 8b, 8c),
**characterized in that**
the jumper bridge insertion opening (8a, 8b, 8c) extends in the insertion direction (9) of the jumper bridge (7a, 7b, 7c) into the jumper bridge insertion opening (8a, 8b, 8c) from the housing base (4a, 4b, 4c) in the direction of the housing upper face (5a, 5b, 5c) at an angle α between 20 and 70° to the transverse axis (10) of the housing (3a, 3b, 3c).

2. Connection module according to Claim 1, **characterized in that** the jumper bridge insertion opening (8a, 8b, 8c) is arranged on an upper area of the transverse face (6a, 6b, 6c) of the housing (3a, 3b, 3c) formed adjacent to the housing upper face (5a, 5b, 5c).

3. Connection module according to Claim 1 or 2, **characterized in that** the jumper bridge insertion opening (8a, 8b, 8c) is formed on a module insert (16a, 16b, 16c), wherein the module insert (16a, 16b, 16c) is inserted in an opening formed on the transverse face (6a, 6b, 6c) of the housing (3a, 3b, 3c).

4. Connection module according to any one of Claims 1 to 3, **characterized in that** the jumper bridge insertion opening (8a, 8b, 8c) is formed on a retaining element (13a, 13b, 13c) protruding from the transverse face (6a, 6b, 6c) of the housing (3a, 3b, 3c).

## Revendications

1. Module de connexion, avec
un boîtier (3a, 3b, 3c) présentant une base de boîtier (4a, 4b, 4c) et un côté supérieur de boîtier (5a, 5b, 5c), dans lequel le boîtier (3a, 3b, 3c) peut être fixé par l'intermédiaire de la base de boîtier (4a, 4b, 4c), au moyen d'un mouvement de pivotement du boîtier (3a, 3b, 3c), sur un profilé support (2),
plusieurs éléments de connexion disposés dans le boîtier (3a, 3b, 3c) et
au moins une ouverture d'insertion de strap enfichable (8a, 8b, 8c) disposée sur un côté transversal (6a, 6b, 6c) du boîtier (3a, 3b, 3c) pour la réception d'un strap enfichable (7a, 7b, 7c), dans lequel un élément de contact est disposé dans l'ouverture d'insertion de strap enfichable (8a, 8b, 8c) pour la formation d'une mise en contact électrique avec le strap enfichable (7a, 7b, 7c),
**caractérisé en ce que**
l'ouverture d'insertion de strap enfichable (8a, 8b, 8c) s'étend en direction d'insertion (9) du strap enfichable (7a, 7b, 7c) dans l'ouverture d'insertion de strap enfichable (8a, 8b, 8c) depuis la base de boîtier (4a, 4b, 4c) en direction du côté supérieur de boîtier (5a, 5b, 5c) selon un angle α compris entre 20 et 70° par rapport à l'axe transversal (10) du boîtier (3a, 3b, 3c).

2. Module de connexion selon la revendication 1, **caractérisé en ce que** l'ouverture d'insertion de strap enfichable (8a, 8b, 8c) est disposée au niveau d'une zone supérieure, formée de manière limitrophe au côté supérieur de boîtier (5a, 5b, 5c), du côté transversal (6a, 6b, 6c) du boîtier (3a, 3b, 3c).

3. Module de connexion selon la revendication 1 ou 2, **caractérisé en ce que** l'ouverture d'introduction de strap enfichable (8a, 8b, 8c) est réalisée au niveau d'une insertion modulaire (16a, 16b, 16c), dans lequel l'insertion modulaire (16a, 16b, 16c) est mise en place dans une ouverture formée sur le côté transversal (6a, 6b, 6c) du boîtier (3a, 3b, 3c).

4. Module de connexion selon l'une des revendications 1 à 3, **caractérisé en ce que** l'ouverture d'insertion de strap enfichable (8a, 8b, 8c) est réalisée sur un élément de support (13a, 13b, 13c) en saillie par rapport au côté transversal (6a, 6b, 6c) du boîtier (3a, 3b, 3c).
